# EUROPEAN PATENT APPLICATION

(11) **EP 1 081 461 A2**
(43) Date of publication of application: **07.03.2001**
(21) Application number: 00118109.8
(22) Date of filing: 25.08.2000
(51) Int. Cl.: G01C 21/00, G01C 21/36, G08G 1/0969

(54) **Navigation apparatus with navigation data processor device and man-machine interface device**

(30) Priority: 30.08.1999 JP 24300299; 30.08.1999 JP 24300399
(71) Applicant: AISIN AW CO., LTD., Anjo-shi Aichi 444-1192 (JP)
(72) Inventor: Morimoto, Kyomi, Okazaki, Aichi 444-8564-11 (JP); Matsuba, Junzo, Okazaki, Aichi 444-8564-11 (JP)
(74) Representative: VOSSIUS & PARTNER

(57) **Abstract**

The navigation apparatus as described displays a map to permit execution of inputting of a location and tracking of a present position. Said apparatus comprises storage means (3) for storing map data, man-machine interface means (1,6) having a display memory and picture drawing means for expansion and visualization of display data and for acquiring said display data to draw it in said display memory and also for setting up and displaying a display range, and navigation data processor means (4) for reading map data out of said storage means, for performing location inputting and present position tracking, and for sending toward said man-machine interface means (1,6) display data to be expanded and drawn in said display memory.

## Description

The present invention relates to navigation apparatus for displaying maps and performing location inputting and present vehicle position tracking along with a navigation data processor device and man-machine interface device for use therein. This invention also relates to navigation apparatus for tracking a traveling land vehicle and guiding it to reach its destination location being set up.

One typical navigation apparatus is disclosed for example in Published Unexamined Japanese Patent Application No. Hei 2-28688, which is the one that tracks a land vehicle for guiding the vehicle to travel along a route leading to its destination location while displaying a map of a specified geographical area to which a present vehicle position belongs and displaying as guidance information a traffic intersection diagram at a location immediately before a guidance-necessary intersection along the travel route.

The navigation apparatus of this type for displaying on a display device the map information and guidance information is operable to read data from map data and then permit picture drawing means to perform creation of graphical images such as lines and filled areas to thereby output them to associative display means in the form of video signals or RGB signals. It may also be considered that land vehicles are often provided with other devices as built therein, and that any functionally overlapping devices are designed to exhibit common shareabilities through interconnection between respective devices via a chosen network. In particular, display devices are commonizable in most cases - for example, it is well known among those skilled in the art that one display device is used to visually display thereon television images in some cases and is also adaptable for use in displaying an audio instrument panel image in other cases. Furthermore, the built-in devices may include one that has graphics image creation or "picture drawing" means.

If a connected device other than the navigation apparatus has its own picture drawing means, then the resultant system might suffer from an extra increase in production cost as a whole. Further, in the event that data communication with a man-machine interface (MMI) is performed from the navigation apparatus by use of bit-map data, the resulting data transfer rate can decrease causing associative output means to be delayed in timing of on-screen image display.

The present invention is made to solve the above-noted problems, and its primary objective is to enable efficient execution of data communications for land map displaying to thereby make it possible to smoothly perform map scrolling and rotation processing even where the main body of navigation apparatus is separated from its associative man-machine interface (MMI) unit.

To attain the foregoing object, the present invention provides a new and improved navigation apparatus for displaying a map to permit execution of inputting of a location and tracking of a present position, which is featured by comprising storage means for storing map data, man-machine interface means having a display memory and picture drawing means for expansion and visualization of display data and for acquiring said display data to draw it in said display memory and also for setting up and displaying a display range, and navigation data processor means for reading map data out of said storage means, for performing location inputting and present position tracking, and for sending toward said man-machine interface means display data to be expanded and drawn in said display memory.

Further, said man-machine interface means is operable to manage a drawing range and display range of said display data and issue to said navigation data processor means a request for transmission of display data before the display range goes out of said drawing range whereas said navigation data processor means is operable to manage a drawing range and display range of said display data and issue to said man-machine interface means display data being rewritten before the display range goes out of said drawing range, wherein said man-machine interface means has input means for performing movement and designation inputting of the display range and is operable to set up said display range in response to art input of the input means, and wherein said navigation data processor means sends a display range instruction to said man-machine interface means on the basis of said location inputting and present position tracking.

Also disclosed herein is a navigation data processor device in a navigation apparatus including as independently arranged components the navigation data processor device for use in performing navigation data processing and a man-machine interface device for performing displaying, which is featured in that said navigation data processor device is arranged to read map data out of a storage device for performing location inputting and present position tracking to send toward said man-machine interface device display data being expanded and drawn for visualization in a display memory, wherein the man-machine interface device is specifically arranged to have a display memory and picture drawing means for expansion and visualization of display data, for acquiring said display data from said navigation data processor device and then drawing it in said display memory while setting up and displaying a display range concerned.

Additionally the instant invention also provides a navigation apparatus for tracking a traveling vehicle and for guiding it to a destination location being set up, featured by comprising storage means for storing map data, navigation data processor means for reading map data out of said storage means, for tracking the traveling vehicle, and for outputting display data and more than one display command for use in guiding up to the destination location, and man-machine interface means having a memory used to draw display data, for acquiring display data and display command as output from said navigation data processor means and then expanding and drawing them in said memory to thereby display a range being instructed, wherein said navigation data processor means includes means for converting the map data read out of said storage means into display data with a data size and graphical image type added thereto in a format as determined per graphical image to be drawn.

Furthermore, the navigation apparatus is featured in that said display data edited has information as to graphical images and display attributes including colors and line thicknesses and others, wherein said display command indicates a display center, scale or size, and direction.

The invention is further explained with reference to the drawings:
Fig.1 A diagram showing one preferred form of the navigation apparatus in accordance with the present invention.
Fig.2 A diagram for explanation of an overall flow of process steps of the navigation apparatus in accordance with the present invention.
Fig.3 A diagram for explanation of an example of display control processing of a navigation data processor device.
Fig.4 A diagram for explanation of one example of display processing of a man-machine interface device.
Fig.5 A diagram showing an example of processing in the event that the man-machine interface device performs management of display data of a map or maps to be displayed on a screen.
Fig.6 A diagram showing an example of processing in case the navigation data processor device performs management of display data of a map(s) to be displayed on the screen.
Fig.7 A diagram showing in block form an exemplary configuration of a display control system of the navigation data processor device and man-machine interface device.
Fig.8 A diagram showing an exemplary structure of data being transmitted.
Fig.9 A diagram showing an example of processing of map display transmit data in the navigation data processor device.
Fig.10 A diagram showing an exemplary procedure of communications between the navigation data processor device and man-machine interface device.

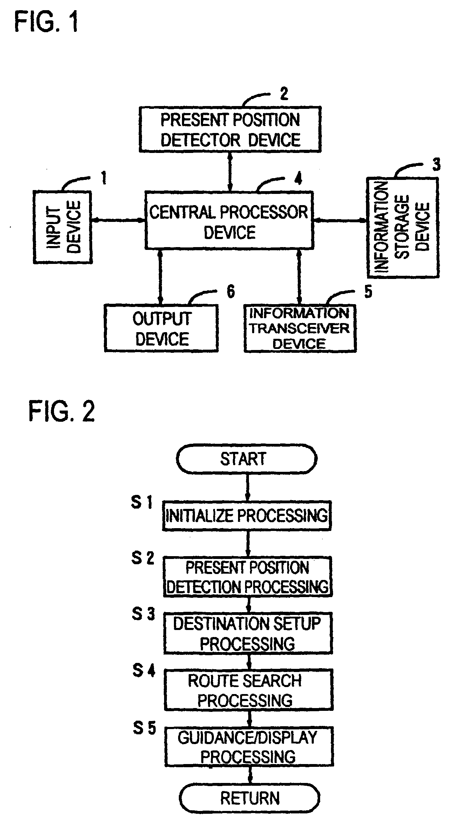

One preferred embodiment of the present invention will now be explained with reference to the accompanying drawings below. Fig.1 is a diagram showing an exemplary configuration of a navigation apparatus incorporating the principles of the invention. The illustrative navigation apparatus is generally constituted from an input device 1 for inputting information as to route guidance, a present position detector device 2 for use in detecting information concerning a present position of a land vehicle of interest, an information storage device 3 which records navigation-use data required for computation of a geographical travel route and display/audio guidance data necessary for route guidance plus programs (application programs and/or operating system or "OS") and the like, a central processor device 4 which is provided as the navigation data processor means for performing display/audio guidance processing necessary for route search processing and route guidance and further performing control of the overall system involved, an information transmit/receive or "transceive" device 5 that is operable to transmit and receive information as to vehicle travel such as for example road information and traffic information and detect information concerning the present vehicle position and further transmit and receive information on such present position, and an output device 6 for outputting information as to the route guidance.

The input device 1 has several functions of inputting a target or destination location and instructing the central processor device 4 to perform navigation processing in a way pursuant to the driver's will. As the means for realizing such functions, remote controllers including but not limited to a touch switch or jog dial may be employed to permit inputting of a destination location using a telephone number or coordinates on a land map and also request of route guidance. In addition the apparatus of the present invention also comes with a device for enabling speech conversation through voice input, which functions as an audio input device. Optionally there may be added thereto a record card reader device for reading data as recorded on IC cards or magnetic cards. A data communications device may also be added for storing therein data necessary for navigation and for transmitting and receiving data to and from an information source such as an information center for providing information via communications links in reply to a request from a driver or alternatively a portable electronic device storing therein map data and destination location data along with abridged land maps and building structure shape maps.

The present position detector device 2 is configured from a GPS receiver device for calculation of the land vehicle's present position and any one of its travel speed and absolute azimuth by utilization of the presently available global positioning system (GPS), a beacon receiver device for receiving several information items such as present position information and traffic lane information and others, a data receiver device that employs cellular phones (car telephones) or FM multiplex signals or else to receive correction signals of the GPS, an absolute direction sensor for detection of the vehicle's travel direction based on the absolute azimuth by use of terrestrial magnetism by way of example, a relative direction sensor for detection of the vehicle's travel direction based on relative azimuth by using for example steering sensors and/or gyro sensors, and a distance sensor for detecting the resultant travel distance from the vehicle wheel's rotation number for example.

The information storage device 3 is a storage device that stores therein navigation programs and data, which device may be any one of the currently available CD-ROM, DVD-ROM, floppy disk, memory card or other similar suitable ones. Note here that an internal storage device may alternatively be employed, such as a ROM or flash memory as built in the main body. The programs include a program for use in performing processing such as route search, program for performing interactive guidance based on audio input control schemes, a program for performing display/audio output control as required for route guidance, a program for searching any desired land point and facility and the like; the stored data may include files of all the data items necessary for the navigation apparatus, including but not limited to map data, search data, guidance data, map matching data, destination location data, registered location data, road data, graphical image data of branch or junction points such as traffic intersections, data classified according to genre, and land mark data. Note that the CD-ROM as applicable herein may include a certain type of one which stores data alone while letting the programs be stored in its associated central processor device or, alternatively, another type that acquires data and program components from external facility or equipment through communication activities.

The central processor device 4 is configured from a CPU for execution of a variety of different kinds of arithmetic processing tasks, a flash memory for storing therein program components as read out of the CD-ROM of the information storage device 3, a ROM storing a program (program reader means) for use in performing verification and update processing of the program of the flash memory, and a RAM for temporarily storing searched route guidance information including the coordinates of a destination location being presently set up and road name code No. and the like along with data obtainable during execution of arithmetic processing. The device further comprises other components that are not specifically depicted in the drawing, which include an audio/voice processor for performing interactive processing through voice inputting from the input device 1 while synthesizing, based on an audio/voice output control signal from the CPU, those data as read out of the information storage device 3 - such as voice, phrases, sentences each organized into a single complete form, sounds or the like - for conversion into an analog signal which is then output to more than one speaker unit, a communication interface for handling input/output data over communication links, a sensor input interface for receiving and taking thereinto a sensor signal of the present position detector device 2, and a clock module for use in writing date and time into internal diagnosis information. Additionally the aforesaid program for performing update processing may be stored in an external storage device when the need arises.

All the programs in accordance with the present invention and other programs for executing navigation system routines concerned may be stored in a CD-ROM for use as an external recording medium; alternatively, part or the whole of such programs may be stored in a ROM 42 that is provided on the main body side. Data and programs as stored in this external record medium are input as external signals to the central processor device in the navigation apparatus main body and are then processed thereby to achieve a variety of kinds of navigation functions.

As stated previously, the navigation apparatus embodying this invention includes therein a relatively large capacity of flash memory for use in reading programs out of the CD-ROM of the external storage device and a small capacity of ROM storing therein a certain program (program reader means) for performing CD startup processing. The flash memory is a nonvolatile memory means capable of retaining once-recorded information even after interruption of electric power supplied thereto. And, as such CD startup processing, let the program of such ROM serving as the program reader means get started to perform check/verify of the program stored in the flash memory, thereby reading thereinto disk management information or the like of the CD-ROM of the information storage device 3. A program load processing (update processing) is to be carried out depending on a result of determination from this information and the status of the flash memory.

The information transceiver device 5 is formed of several devices including a GPS receiver device for gaining information by use of the global positioning system (GPS), a VICS information receiver device for gaining information by using FM multiplex broadcasting, radio-wave beacons, optical beacons and the like, and a data transmit/receive or "transceive" device for two-way or bidirectional communication of information with the information center (e.g. ATIS) or other land vehicles.

The output device 6 has functions of outputting guidance information whenever requested by the vehicle driver in the form of audio voice and/or display images, and also of outputting data or else as navigation-processed data at the central processor device 4 in the form of printed matter. As the means for realizing such functions, in order to visually display on the screen the data processed by the central processor device 4 and data stored in the information storage device 3, several components are provided which include but not limited to a functional module for image expansion and visualization of display data consisting essentially of those data items of figures and components, a memory used therefor, a display unit for displaying the image data as drawn or "painted" in the memory, a printer for outputting as printed matter or hard copy the data processed at the central processor device 4 and data stored in the information storage device 3, and one or more speaker units for outputting route guidance in the form of voice and sounds.

The display unit is typically constituted from a light weight and slim size of liquid crystal display module, which is operable to visually display on its screen an enlarged graphical image for a traffic intersection based on map data being processed by the central processor device 4 and guidance data along with other related indications such as the name of a destination location, time, distance, and an arrow indicative of a travel direction. It will also be possible, by sending image data to the display as bitmap data, to employ a communications link for use in serial communication events rather than via exclusive-use or "dedicated" image signal transfer lines, wherein the communications link is also attainable by common use of any other currently available communications links. Note that the display may be designed to have a memory for temporarily storing therein bitmap data where necessary.

The display unit is provided within an instrument panel adjacent to a driver's sheet so that the vehicle driver is allowed to verify a present vehicle position through viewing of this display while gaining from this display his or her desired information as to a travel route. Additionally, although any specific depiction is omitted herein, the display unit may be designed so that a tablet including a touch panel or touch screen or else is used on the view screen of the display thereby enabling effectuation of land point inputting and road inputting through screen touch or on-screen dragging activities.

In the illustrative embodiment the man-machine interface (MMI) used therein is formed of the one with the output device 6 and input device 1 for purposes of explanation, wherein it comes with a picture drawing or "visualizer" device for creating a graphical image to be output and displayed on the output device 6 and also an image memory for storage of such image thus visualized. It should be noted that although the configuration diagram of Fig. 1 is mainly directed to the navigation apparatus per se, this may be replaced with any other equipment having connectabilities with several devices such as the output device, input device, navigation apparatus or the like. With such an arrangement, it becomes possible even where the output device does not have any specific picture-draw device to visualize any desired image through appropriate controlling of such visualizer device in cases where any one of the other devices connectable with the navigation apparatus over a chosen network has its own visualizer device required.

Fig. 2 is a diagram for explanation of a flow of the overall system procedure of the navigation apparatus embodying the invention. Upon startup of the route guidance program as has been loaded from the information storage device 3 into the central processor device 4, the present position detector device 2 is rendered operative to detect a present vehicle position, then displaying a map of a selected peripheral land area with the present position being as a center while at the same time indicating thereon the title or name or else of such present position (at step S1). Then, set up a destination location using a target name such as a place name or facility name or else, telephone number, address, registered land point, road name, and the like (step S2); next, search for an appropriate travel route leading to the destination location from a presently detected vehicle position (step S3). After determination of such route, recurrently perform route guidance until when the vehicle actually arrives at its destination location while causing the present position detector device 2 to perform tracking of the present position on a real time basis (step S4). In case a request for detour road setup is input prior to arrival at the destination location, establish a search area for again performing searching or "re-searching" within such search area; thereafter, repeat execution of route guidance until the vehicle actually reaches its destination in a way similar to that discussed above.

The navigation apparatus has a plurality of functions such as a mode for setup of any desired land points, a route search mode stated supra, a guidance information output mode, a map display mode and others, wherein a respective one of these functions is under the control of mode management means on a case-by-case basis. A method of controlling the navigation apparatus will now be explained under an assumption that this apparatus is used while being connected with other devices over a network. Here, in the event that a device having its own visualizer means is present over the network, if the navigation processor unit is so controlled as to draw a graphical image by use of this externally available visualizer means through transmission of necessary display commands and data, it becomes possible to avoid having to provide the navigation apparatus per se with any visualizer means and picture-draw memory for storing resultant images thus drawn.

Additionally, a scheme for outputting a display image to the output means will be explained using one specific example for displaying a map. Firstly, the navigation processor unit operates to judge a map area or region containing therein a present vehicle position and then read map data out of its associated information storage means. Then, use such read data to prepare display data subjected to transmission with information items such as positions and colors plus line thicknesses and others being added thereto in a specific format as determined per graphics figure to be drawn. Next, the visualizer means operates to perform visualization based on the data as sent thereto and then store in the picture-draw memory. Note here that letting the MMI comprise a memory for storing display data as output from the navigation processor unit makes it possible to smoothly perform any intended map rotation and zooming tasks. In such case, the output means may be designed to include a memory for storing data of a display region by the data of such draw memory. Also note that the memory for storing display region data may be provided in a way independent of the draw memory. Next, in case the map is scrolled with any movement of the present position, the MMI unit attempts to judge whether the display region stays within a region being presently stored in the draw memory - if the former exceeds the latter then request the navigation apparatus to provide the next map information. It should be noted that such region determination may be made based on a read-in reference region that is slightly larger than the display region or alternatively a read-in region smaller than the region of the draw memory. Next, the navigation processor unit detects issuance of a map information request from the MMI and then continues execution of new map data read processing. Since provision of an operation mode management unit in such navigation processor unit makes it possible to control it to judge the availability of a request from the MMI side and select any necessary mode in reply to this request and also produce display data, it becomes possible to separate the navigation processor unit for computing a present vehicle position and calculating route information while notifying guidance information from the visualization processor unit for drawing picture images required.

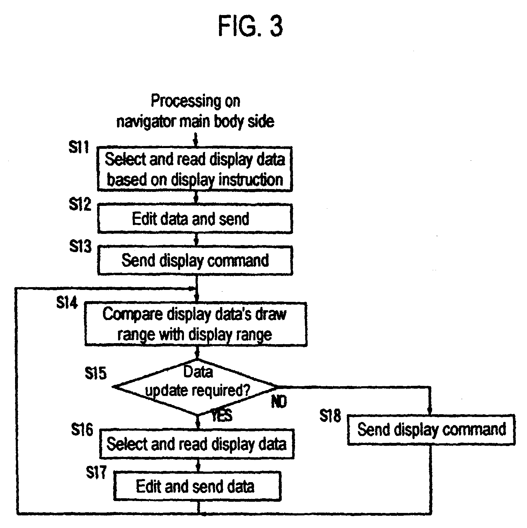

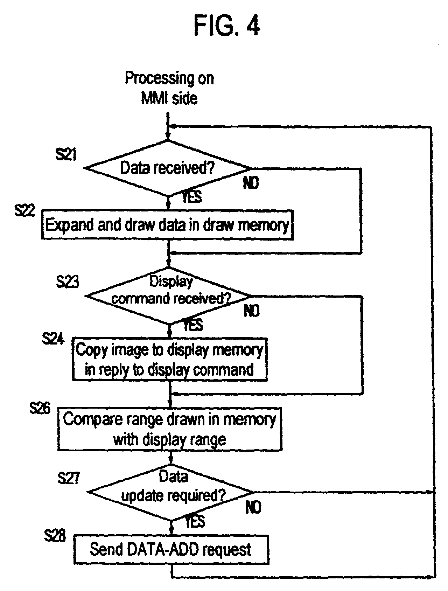

Fig. 3 is a diagram for explanation of an example of the display control processing in a navigation data processor device, and Fig. 4 is a diagram for explanation of exemplary display processing of a man-machine interface device.

The navigation apparatus in accordance with the present invention is the one that permits transmission of display data of a land map to be displayed and display commands by way of example from the navigation data processor device designed including the central processor device 4 toward the man-machine interface (MMI) device to thereby let the MMI device expand and draw or "visualize" the display data for displaying on the screen a specified geographical area as a display region in a way pursuant to a display command. The display data as used herein is the data as prepared on the basis of map information and guidance information or else in order to draw any intended diagram, with certain information items such as positions and colors plus line thicknesses and others being added thereto in a format determinable per figure to be drawn. Information as to data sizes and graphical figure types may further be added thereto if necessary. On the other hand, the display commands include a command that instructs what range of a map thus expanded and visualized should be displayed using some parameters including but not limited to its center and dimension (size) along with coordinates at the upper right and lower left portions thereof, a command that instructs the direction of a display of a map such as in the case of displaying a map with a present vehicle position being as its center and with a vehicle travel direction set in the upward direction, and a command that instructs a scaling ratio or magnification as well as contraction scale in the case of performing zooming. In regard to the display commands, in cases where the present position is tracked and displayed with the travel direction being shown upwardly, when an orientation is instructed, display data will be expanded and visualized in accordance with such instruction of the orientation - upon instruction of a present vehicle position, a map with the present position being as its center and with the travel direction set upwardly will be displayed.

In case the navigation data processor device is designed to manage the display data and display range, display data of a fixed area will be transmitted while letting the display range move in accordance with a display command at its area to permit scrolling and, when the display range almost goes out of the area of display data transmitted, display data of a new area will be sent. On the contrary, in case the MMI device is designed to handle the display data and display range, display data sent from the navigation data processor device will be expanded for visualization while letting the resultant display range move in accordance with a display command to permit scrolling and, when the display range almost goes out of the area that has been subjected to expansion and visualization, a request command is sent to the navigation data processor device for acquisition of necessary display data. Additionally, in view of the fact that present position detection is done on the navigation data processor device side during present position tracking or else, instruct the MMI device to provide a display range with a present vehicle position being as its center. In contrast, in case map scrolling and shrinking/enlargement is to be done based on the user's instructions in land point input events, an input unit for performing inputting of the user's instructions such as a remote controller or touch switch or else is included in the MMI device, thereby achieving an alternative arrangement which permits the MMI device to perform map scrolling and shrinkage/enlargement within a range as drawn in a display memory in reply to the user's instructions while requesting the navigation data processor device to send display data in a new area when the need arises.

An explanation will next be given of a practical example of the processing. As shown in Fig. 3, the navigation data processor device first operates to read selected display data on the basis of a display instruction (at step S11), then edit and transmit such display data (step S12), and further send forth a display command (step S13). Display instruction is such that in one exemplary case where a map is displayed for execution of route guidance while tracking a present vehicle position, a display command is generated and issued which is indicative of a display range with a presently detected vehicle position being as its center and, in the event that a map is displayed in order to perform setup of land points such as a destination location and pass-through points or else, a display command is issued which indicates a display range with a land point as designated in accordance with input of its address, genre, telephone number or the like being as its center. And a display command for movement of the center of the display range and shrinkage/enlargement of the display range is issued along with an instruction for movement and scrolling plus shrinkage/enlargement of the present position.

Compare a picture drawing range of the transmitted display data with the display range as instructed by the display command (at step S14); then, judge whether it is necessary to send display data of a new area (step S15). For example, if the rest of such picture draw range is less in a scroll direction and thus a shrunk image display can result in oversizing from the picture draw range, then judge that data transmission is necessary ("YES") - in this case, select and read display data (step S16), and then edit and send such display data (step S17). The steps S14, S15 are the processes in case the navigation data processor device manages both the display data and display range. Where the MMI device is expected to manage the display data and display range, judge whether a display data request command is received from the MMI device and then read display data as selected in accordance with the request command (S16) and next edit and send such display data (S17).

However, if enough room is still available even after completion of movement or shrinkage of the display range within the picture draw range then judge that any additional data transmission is not necessary ("NO"), and then continue to send the display command (step S18). Thereafter, return to step S14 which recurrently executes similar processes of sending necessary data and display command(s) while simultaneously controlling scrolling and rotation plus shrinking/enlargement of the map being visually displayed in the MMI device.

On the other hand the MMI device operates in a way as shown in Fig. 4. Upon startup of display, judge whether display data is received from the navigation data processor device (step S21) and whether display command is received therefrom (step S23). And, upon actual receipt of the display data, expand such display data to draw or visualize the data in the draw memory (step S22). Upon receiving of a display command, copy an image within a display range to the display memory in accordance with such display command (step S24) and then display on the screen the image within the display range. In summary, in this case, both the draw memory of display data and the display memory of the screen image are employed.

Further, compare the picture draw range in which the display data has been expanded and visualized with the display range as instructed by the display command (step S26), and then judge whether it is necessary to send display data of a new area (step S27) - if YES then send a display data add request command to the navigation data processor device (step S28). The steps S26-S28 are in the case where the MMI device handles management of the display data and display range; in case the navigation data processor device manages such display data and display range, the processes of steps S21-S24 will be repeated.

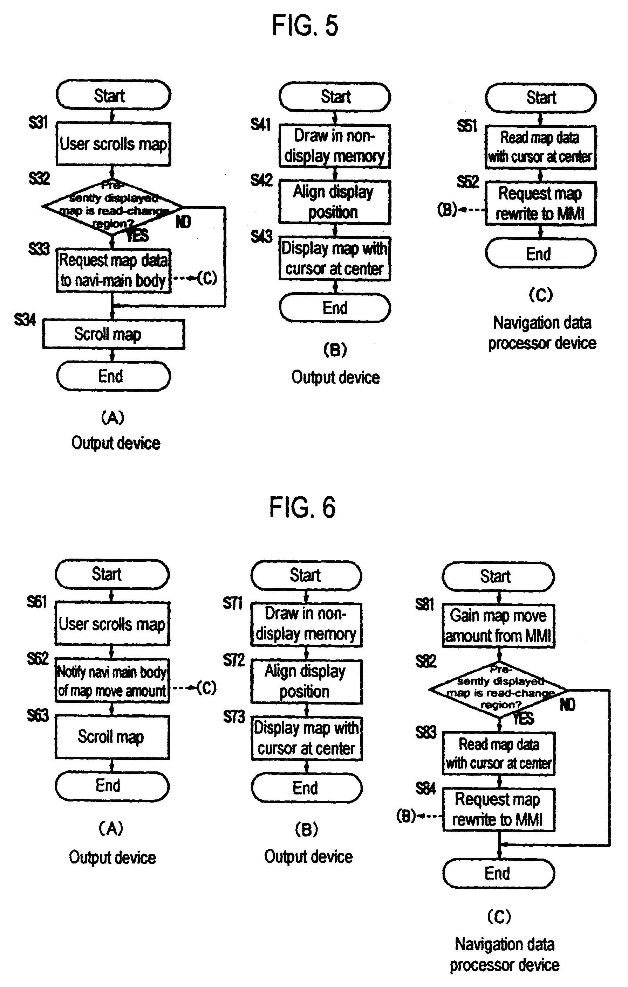

An explanation will next be given of the processing to be done during map scrolling. Fig. 5 is a diagram showing an example of such processing in case the MMI device handles management of display data of a map being displayed on the screen whereas Fig. 6 is a diagram showing exemplary processing in case the navigation data processor device manages display data of a map being displayed on the screen.

In case the output device (MMI) is expected to perform management of display data of a map to be displayed on the screen, execute the processing shown in Fig. 5 for example. Firstly, as shown in Fig.5(A), detect the user's scrolling operation (step S31); then, compare a display region to a data region being subjected to visualization to thereby judge whether the display region has reached a read-change or "re-read" region as established in the data region (step S32) - if NO then immediately perform map scroll processing (step S34). If YES then request the navigation data processor device to provide display data of the map (step S33) and then perform map scroll processing (step S34).

Upon issuance of a map request from the MMI to the navigation data processor device at step S33, the navigation data processor device operates to perform the processing of Fig. 5(C). Recognize the map data request from the MMI side and then read from the storage means certain road data of a map near or around a cursor position and a present vehicle position (step S51); then, create display data from such map data thus read. For instance, extract the position coordinates of respective roads and lengths plus shapes while determining display colors and line thicknesses based on road attributes and lane numbers as well as road widths or else to thereby create transmission data consisting essentially of a graphic format, position, color, line thickness, data size and others. Next, send the resultant prepared transmit data toward the MMI while simultaneously sending thereto more than one display command for visualization of a map to thereby request rewriting of a map (step S52). Note here that in case the road data of a map near the cursor position is read out of the storage means at step S51, data reading may be done based on the map's scroll direction and speed with a further progressed land point being as the reference.

Upon issuance of a map rewrite request from the navigation data processor device to the MMI at step S52, the MMI performs the processing of Fig. 5(B). Draw or visualize the received display data in one of memories which is not displayed (step S41); then, align the display position (display range) (step S42); next, display a map with either the cursor position or present position being placed at the center thereof (step S43).

Accordingly, the above processing is such that two separate memories are provided in the MMI device, which are switchably subject to displaying in a way such that one of them is for use as a display memory and the other is used as a non-display memory. More specifically, when displaying a map as drawn in the display memory, if the display range goes out of its picture draw range then visualize a map of a shifted region in the other nondisplay memory for displaying the intended image while letting the nondisplay memory be switched to the display memory. Thus, the one that has been the display memory now becomes a nondisplay memory.

In case the navigation data processor device is to perform management of display data of a map to be displayed on the screen, execute the processing as shown in Fig. 6. First, as shown in Fig. 6(A), the MMI device operates to detect the user's scrolling operation (step S61). Then, notify the navigation data processor device of the shift amount of a land map (step S62); next, perform map scroll processing (step S63).

Upon issuance of such notice of map shift amount from the MMI to the navigation data processor device at step S62, the navigation data processor device performs the processing of Fig. 6(C). Acquire the map's shift amount (step S81); then, compare a display region to a data region under visualization to judge whether the display region has reached a read-change region as set in the data region (step S82). If YES then read from the storage means certain road data of a map near or around either a cursor position or present vehicle position (step S83); then, convert the map data to display data, send the converted data to the MMI, and request map rewriting (step S84).

Upon issuance of a map rewrite request from the navigation data processor device to the MMI at step S84, the MMI performs the processing of Fig. 6(B). Visualize the display data received at one of the memories which is not displayed (step S71); then align a display position (display range) (step S72); next, display a map with a cursor position or present position being at the center thereof (step S73).

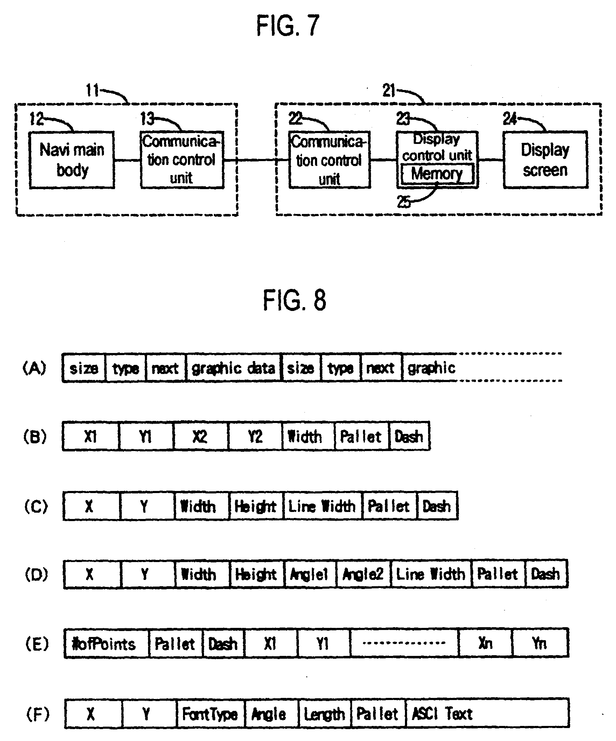

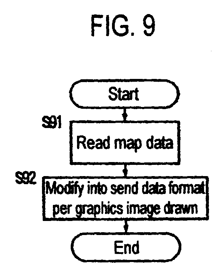

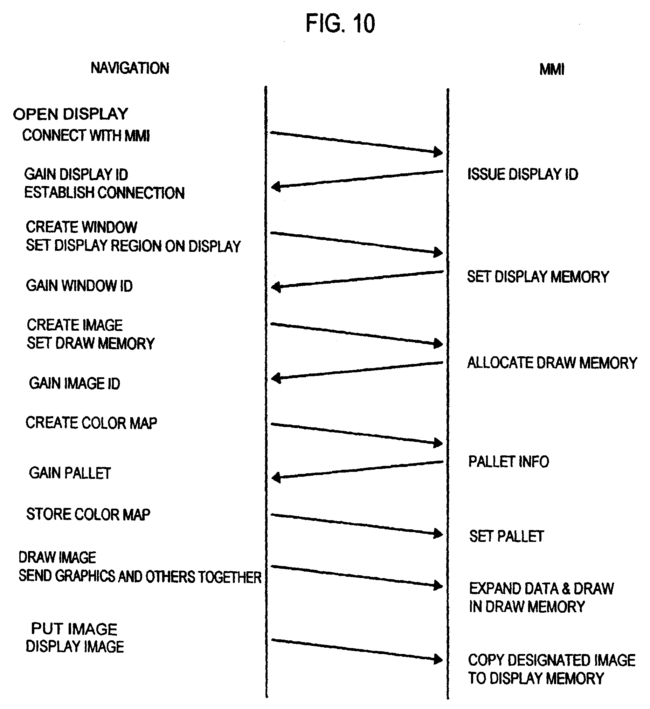

Fig. 7 is a diagram showing in block form an example of the configuration of a display control system of the MMI device and navigation data processor device; Fig. 8 is a diagram showing an exemplary structure of transmit data; Fig. 9 is a diagram showing one exemplary transmit processing of display data of a map in the navigation data processor device; and, Fig. 10 is a diagram showing a procedure of communications between the navigation data processor device and the MMI device.

The display control system of the MMI device and navigation data processor device for performing a display data transmit-and-receive operation in the way stated supra is connected via more than one communication line for example between communications control units 13, 22 as shown in Fig. 7 by way of example. And a navigation data processor device 12 of a navigation data control device 11 is operable to perform processing tasks including location inputting, land point setup, route search, present vehicle position detection, tracking, and route guidance in accordance with instructions as input from an input device and then, based on such processing results, pass display data and display commands to the communications control unit 13. The communications control unit 13 operates to send forth these display data and display commands as passed from the navigation data processor device unit 12 toward the communications control unit 22 over the communication line. In addition, upon receipt of a request command from the communications control unit 22, pass it to the navigation data processor device unit 12.

On the other hand an operation of the MMI device 21 is as follows. Upon acquisition of display data and display commands at the communications control unit 22 from the communications control unit 13 via the communication line, a display control unit 23 operates to expand the display data for visualization in a memory 25 to thereby display an image within a display range on a display screen 24 in accordance with a display command. One recommended way is that upon gaining of display data at the display control unit 23 a memory 25 expands for visualization such display data to thereby permit visual display within a specified address range pursuant to a display command. Another way is that a display memory for storing display data and display commands and a draw memory for use in expansion and visualization of such data are prepared, wherein switching is done between the display use and non-display use in the way as discussed previously with or without a plurality of picture draw memories for visualization of a map and an arrow for route guidance which will be overwritten on the map. In case the display control unit 23 is expected to manage the display data and display range, when new display data becomes necessary, a request command is passed to the communications control unit 22 whereby data transmission is done from the communications control unit 22 via the communication line to the communications control unit 13 of the navigation data control device 11.

The display data to be sent from the navigation data control device 11 to the MMI device 21 is such that as shown for example in Fig. 8(A), the size of such graphics data and type of graphic primitive such as a line or rectangle or else plus the presence of next data are added to the head of graphical data, thus providing a data length of an even number by way of example. One example of such graphic data is shown in Fig. 8(B), which is a line; another example is shown in Fig. 8(C) which is a rectangle; yet another example is shown in Fig. 8(D) which is an arc; a further example is shown in Fig. 8(E) which is a polygon (or "poligonn"); a yet further example is shown in Fig. 8(F) which is text data. Each of the data has information (shape information) as to the coordinates, angle, width, height, length and the like along with information concerning the display attributes such as the color and line thickness or else.

At the communications control unit of the navigation data processor device, upon occurrence of map data reading as shown in Fig. 9 (at step S91), modify it into a transmit data format shown in Fig. 8 once per graphical image visualized (step S92), and then send it to the MMI device. A procedure of communications between the navigation data processor device and the MMI device will be executed in a way as shown for example in Fig. 10. First, when a request for connection with the output device (MMI) is issued from the navigation data processor device, the output device generates and issues a "Display ID" to thereby permit establishment of mutual connection. Thereafter, perform setting of a display region of the display unit and setup of a picture-draw memory and also acquisition of pallet information; then, send an ensemble of graphics together and instruct displaying of an image.

It must be noted that the present invention should not be limited only to the illustrative embodiment and may be modified in a variety of different forms. One example is that although in the above embodiment the MMI device for performing the processing necessary for drawing maps is arranged in a way independent of the navigation data processor device operatively associated therewith, the invention may also be applied in a similar way to command processing for menu operations, wherein the processing may be used differently so that in response to the user's instructions and vehicle signal inputting, the former is used on the MMI device side whereas the latter is used in the navigation data processor device.

Sending the transmit data items together through batch processing makes it possible to improve the responsibility. And the color/road width designation may be determined based on a table as previously stored in the navigation apparatus main body or alternatively determined based on a table prestored in the MMI or, still alternatively, determined based on certain data as input and set up by the user. In addition, since the menu processing is such that destination location search is uncertain in data structure, for example, unknown as to what type of switch (such as broad area, detail, re-search, etc.) should be issued in a map screen, the navigation data processor device notifies the MMI of a switch (function) usable in each mode thereby allowing the MMI to display such switch at any given location with any desired shape and color. An alternative arrangement is that certain function is notified to the MMI on a location-by-location basis while letting the navigation data processor device handle the mode management in a way such that when a switch is selected, this will be notified to the navigation data processor device thus causing a presently displayed image to make a transit to the next screen.

It must also be noted that although the present invention has been explained in conjunction with one specific apparatus which is arranged to perform communication tasks with the navigation data processor unit and the MMI unit being arranged as separate components, it would be readily appreciated that the invention may also be applied similarly to apparatus with the navigation data processor unit and MMI unit being integrated together in hardware configuration and yet separated from each other as software modules. In regard to map scrolling also, in addition to the case of performing tracking of a present vehicle position and moving a map with the present position being placed at the center thereof, the instant invention may similarly be applied to any one of the cases of moving a map while letting the vehicle of interest travel along a geographical route as defined based on a calculation result which in turn is based on a presently input land point and of moving such map through cursor operations during inputting of a land point or points and further of performing shrinking/enlargement processing of the map.

It has been stated that according to the present invention, since the navigation apparatus for performing inputting of locations and tracking of a present vehicle location while displaying maps is specifically arranged to comprise storage means for storing therein map data and a display memory plus graphical image creation means for expansion and drawing of display data while also comprising man-machine interface means for acquiring display data for drawing in the display memory and for setting up a display range for visual displaying and also navigation data processor means for reading map data out of the storage means to perform location inputting and present position tracking and for sending forth display data being expanded and drawn in the display memory toward the man-machine interface means, even when the navigation data processor means and the man-machine interface means are separated from each other on a hardware or software basis, communicabilities are available based on the display data to be expanded and drawn in the display memory, i.e. display data of a map prior to effectuation of drawing or painting, thereby making it possible to perform communication processing while noticeably reducing data amount as compared to image data (draw data). Accordingly, it becomes possible to efficiently perform data communications while at the same time enabling smooth execution of map scrolling and rotation processing.

Another advantage of the invention is that it is possible to design the man-machine interface means in a way adaptable for users' preferences and land vehicles without having to modifying the navigation data processor means or, adversely, make easier design alterations of the navigation data processor means without changing the man-machine interface means. A further advantage lies in an ability to reduce production costs of the navigation data processor means because of the fact that it is no longer required to employ any picture draw means for visual displaying and display memory for drawing display data at the navigation data processor.

In accordance with a further aspect of the present invention a navigation apparatus for tracking a traveling land vehicle and guiding it to reach its destination location being presently set is provided which comprises storage means for storing therein map data, navigation data processor means for reading map data out of said storage means to track the traveling vehicle and for outputting display data and display commands for use in guiding it to arrive at the presently set destination location, and man-machine interface means having a memory for use in drawing or visualizing display data for acquiring display data and display command(s) as output from said navigation data processor means to expand and draw them in said memory and for visually displaying a range instructed, wherein said navigation data processor means includes means for converting the map data as read out of said storage means into certain display data with data size and graphics image type added thereto in a specific format as determined per graphical image being drawn whereby even when the navigation data processor means and man-machine interface means are separated from each other the resultant data communication amount may be reduced as compared to image data so that it becomes possible to increase the data transfer rate accordingly. And the use of a scheme for sending forth information to be displayed on a display device in the form of display data as prepared from information such as positions and colors plus line thicknesses or else in a prespecified format determined per graphics image being drawn makes it possible to visually display any intended images with enhanced viewabilities without having to perform partial deletion or interpolation of data with respect to enlargement and shrinkage of land maps. It is also possible to smoothly perform any intended scrolling and rotation of such maps. Additionally, it is possible to design the man-machine interface means in deference to the user's preferences and land vehicles without having to modify the navigation data processor means or, adversely, make easier design alteration or redesigning of the navigation data processor means without changing the man-machine interface means. Furthermore, since the navigation data processor means is no longer required to have therein any one of the memory used during displaying and the processor means for drawing or visualizing graphical images, it is possible to likewise reduce the complexity while at the same time reducing manufacturing costs required.

## Claims

1. A navigation apparatus for displaying a map to permit execution of inputting of a location and tracking of a present position, comprising:
storage means for storing map data;
man-machine interface means having a display memory and picture drawing means for expansion and visualization of display data, for acquiring said display data to draw it in said display memory, and for setting up and displaying a display range; and
navigation data processor means for reading map data out of said storage means, for performing location inputting and present position tracking, and for sending toward said man-machine interface means display data to be expanded and drawn in said display memory.

2. The navigation apparatus as recited in claim 1, wherein said man-machine interface means is operable to manage a drawing range and display range of said display data and issue to said navigation data processor means a request for transmission of display data before the display range goes out of said drawing range.

3. The navigation apparatus as recited in claim 1 or 2, wherein said navigation data processor means is operable to manage a drawing range and display range of said display data and issue to said man-machine interface means display data being rewritten before the display range goes out of said drawing range.

4. The navigation apparatus as recited in claim 1, 2 or 3, wherein said man-machine interface means has input means for performing movement and designation inputting of the display range and is operable to set up said display range in response to an input of the input means.

5. The navigation apparatus as recited in claim 1, 2, 3 or 4, wherein said navigation data processor means sends a display range instruction to said man-machine interface means on the basis of said location inputting and present position tracking.

6. A navigation data processor device in a navigation apparatus including as independently arranged components the navigation data processor device for use in performing navigation data processing and a man-machine interface device for performing displaying, wherein said navigation data processor device is arranged to read map data out of a storage device for performing location inputting and present position tracking to send toward said man-machine interface device display data being expanded and drawn for visualization in a display memory.

7. The navigation data processor device as recited in claim 6, comprising managing display data in a drawing range and a display range and sending forth display data to be rewritten before the display range goes out of said drawing range.

8. The navigation data processor device as recited in claim 6 or 7, comprising sending to said man-machine interface device an instruction of the display range on the basis of said location inputting and present position tracking.

9. A man-machine interface device in a navigation apparatus including as independently arranged components a navigation data processor device for use in performing navigation data processing and the man-machine interface device for performing displaying, wherein said man-machine interface device has a display memory and picture drawing means for expansion and visualization of display data and is arranged to acquire said display data from said navigation data processor device for drawing it in said display memory while setting up and displaying a display range.

10. The man-machine interface device as recited in claim 9, comprising by managing a drawing range and display range of said display data and issuing toward said navigation data processor device a request for transmission of display data before the display range goes out of said drawing range.

11. The man-machine interface device as recited in claim 9 or 10, having input means for performing movement and designation inputting of the display range and by setting up said display range in response to an input of said input means.

12. The man-machine interface device as recited in claim 9, 10 or 11, having two memories as said display memory and in that these memories are switchably usable while letting one of them be used as a display memory and the remaining one be used as a non-display memory.

13. A navigation apparatus for tracking a traveling vehicle and for guiding it to a destination location being set up, comprising:
storage means for storing map data;
navigation data processor means for reading map data out of said storage means, for tracking the traveling vehicle, and for outputting display data and more than one display command for use in guiding up to the destination location;
man-machine interface means having a memory used to draw display data, for acquiring display data and display command as output from said navigation data processor means and then expanding and drawing them in said memory to thereby display a range being instructed; and
said navigation data processor means including means for converting the map data read out of said storage means into display data with a data size and graphical image type added thereto in a format as determined per graphical image to be drawn.

14. The navigation apparatus as recited in any one of claims 1 to 13, wherein said display data edited has information as to graphical images and display attributes including colors and line thicknesses and others.

15. The navigation apparatus as recited in any one of claims 1 to 14, said display command indicates a display center, scale or size, and direction.
